# EUROPÄISCHE PATENTSCHRIFT

(11) **EP 1 644 159 B1**
(45) Veröffentlichungstag und Bekanntmachung des Hinweises auf die Patenterteilung: **22.11.2006**
(21) Anmeldenummer: 04766113.7
(22) Anmeldetag: 01.07.2004
(51) Int. Cl.: B23Q 1/34, B23Q 1/62, B23Q 1/58, B23Q 5/027, B23B 29/12, H01L 41/09

(54) **WERKZEUGKOPF MIT PIEZOELEKTRISCHEN AKTUATOREN**
TOOL HEAD COMPRISING PIEZOELECTRIC ACTUATORS
TETE D'OUTIL EQUIPEE D'ACTIONNEURS PIEZOELECTRIQUES

(30) Priorität: 04.07.2003 EP 03102025
(43) Veröffentlichungstag der Anmeldung: 12.04.2006
(73) Patentinhaber: HESS, Peter, 6313 Menzingen ZG (CH)
(72) Erfinder: HESS, Peter, 6313 Menzingen ZG (CH)
(74) Vertreter: Falk, Urs
(86) Internationale Anmeldenummer: PCT/EP2004/051330
(87) Internationale Veröffentlichungsnummer: WO 2005/002784

(56) Entgegenhaltungen:
- EP-A- 0 297 574
- EP-A- 1 241 714
- CH-A- 671 187
- DE-A- 2 238 407
- DE-A- 10 055 113
- DE-A- 19 924 823
- US-A- 4 646 595
- US-A- 5 223 713
- US-A- 5 994 820
- US-A1- 2001 020 808
- US-A1- 2002 038 988
- US-A1- 2004 086 351
- KUROSAWA M K ET AL: "TRANSDUCER FOR HIGH SPEED AND LARGE THRUST ULTRASONIC LINEAR MOTOR USING TWO SANDWICH-TYPE VIBRATORS" IEEE TRANSACTIONS ON ULTRASONICS, FERROELECTRICS AND FREQUENCY CONTROL, IEEE INC. NEW.YORK, US, Bd. 45, Nr. 5, September 1998 (1998-09), Seiten 1188-1195, XP000801800 ISSN: 0885-3010
- PATENT ABSTRACTS OF JAPAN Bd. 0103, Nr. 74 (P-527), 12. Dezember 1986 (1986-12-12) & JP 61 168025 A (HITACHI LTD), 29. Juli 1986 (1986-07-29)

## Beschreibung

Die Erfindung betrifft einen Werkzeugkopf mit piezoelektrischen Aktuatoren, gemäß dem Oberbegriff des Anspruchs 1 und die Verwendung dieses Werkzeugkopfes. Ein solcher Werkzeugkopf ist aus den Dokument DE 199 24 823 A bekannt.

Auf den Gebieten der Mikrosystemtechnik bzw. der Nanotechnologie wie auch der Feinwerktechnik und der Halbleitermontagetechnik stellen sich vielfältige Probleme wie beispielsweise die Herstellung einer mit mikromechanischen Strukturen versehenen Oberfläche, das Nacharbeiten, Schleifen oder Polieren einer bereits teilweise hergestellten Oberfläche, etc.. Herkömmliche Fräsmaschinen stossen hier an die Grenzen der Technologie, weil die materialabtragende Spitze des Fräskopfs infolge ihres winzigen Durchmessers selbst bei hohen Umdrehungszahlen das Material kaum mehr abzutragen vermag.

Die Erfindung schlägt vor, anstelle eines Fräskopfs mit einer rotierenden Spitze einen Werkzeugkopf mit einem mit Ultraschall beaufschlagbaren Werkzeug für die Bearbeitung einer Oberfläche zu verwenden. Der erfindungsgemässe Werkzeugkopf gemäß Anspruch 1 umfasst eine Halterung für die Aufnahme des Werkzeugs und zwei Aktuatoren, die über je einen Steg mit der Halterung verbunden sind. Die Aktuatoren ermöglichen einerseits eine Auslenkung der Halterung aus einer Ruhelage um wenige Mikrometer und andererseits die Beaufschlagung der Halterung mit Ultraschall. Zu diesem Zweck enthält jeder Aktuator einen piezoelektrischen Antrieb, der einerseits mit einer Gleichspannung beaufschlagbar ist, um die Halterung in Richtung des Steges auszulenken, und der andererseits mit einem Wechselspannungssignal, d.h. einer Wechselspannung oder einem Wechselstrom, beaufschlagbar ist, um die Halterung in längs des Steges gerichtete Schwingungen zu versetzen.

Der Werkzeugkopf wird bevorzugt auf einer herkömmlichen Werkzeugmaschine montiert, die eine Grobpositionierung des Werkzeugs bezüglich der Oberfläche des zu bearbeitenden Werkstücks in drei kartesischen Koordinatenrichtungen ermöglicht. Die Feinpositionierung des Werkzeugs erfolgt, indem die Aktuatoren des Werkzeugkopfs mit Gleichspannungen beaufschlagt werden, die der einzunehmenden Position entsprechen. Für die Bearbeitung der Oberfläche des Werkstücks werden die beiden Aktuatoren des Werkzeugkopfs nun mit je einem Wechselspannungssignal beaufschlagt, so dass die Spitze des Werkzeugs schwingt. Das Verhältnis der Amplituden der beiden Wechselspannungssignale bestimmt die Schwingungsrichtung des Werkzeugs relativ zu den Achsen der beiden Aktuatoren.

Es gibt nun Anwendungen, bei denen auch eine Feinpositionierung und/oder Ultraschallschwingungen des Werkzeugs in der dritten kartesischen Koordinatenrichtung erforderlich ist. Für solche Anwendungen ist der Werkzeugkopf mit einem dritten piezoelektrischen Antrieb versehen, der ebenfalls mit einer Gleichspannung und einem Wechselspannungssignal beaufschlagbar ist.

Nachfolgend werden Ausführungsbeispiele der Erfindung anhand der Zeichnung näher erläutert. Die Figuren sind nicht massstäblich gezeichnet.

Es zeigen:

Fig. 1 einen erfindungsgemässen Werkzeugkopf,

Fig. 2 den Werkzeugkopf in einer Schnittzeichnung, und

Fig. 3 einen weiteren Werkzeugkopf,

Fig. 4 in Aufsicht einen Aktuator des Werkzeugkopfs, und

Fig. 5 in seitlicher Ansicht einen Stempel mit mikromechanischen Strukturen.

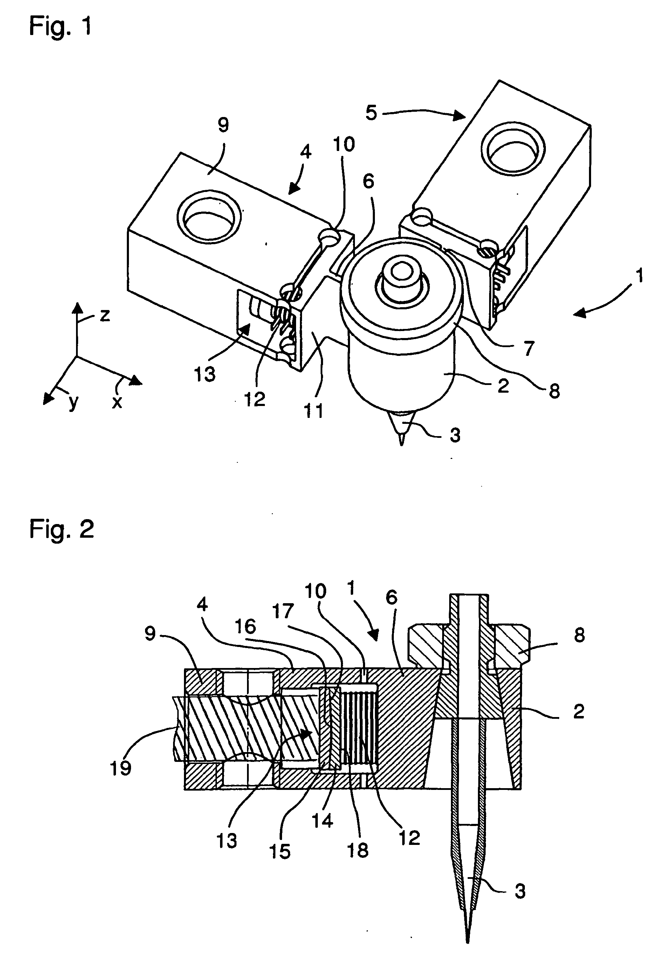

Die Fig. 1 zeigt in perspektivischer Ansicht einen erfindungsgemässen Werkzeugkopf 1. Die Achsen eines kartesischen Koordinatensystems sind mit x, y und z bezeichnet. Der Werkzeugkopf besteht aus einer Halterung 2 für die Aufnahme eines Werkzeugs 3 und aus zwei Aktuatoren 4 und 5, die je über einen Steg 6 bzw. 7 mit der Halterung 2 verbunden sind. Die beiden Aktuatoren 4 und 5 sind an einer nicht dargestellten, in der z-Richtung verstellbaren Platte befestigt. Die beiden Stege 6 und 7 (und somit auch die beiden Aktuatoren 4 und 5) sind bevorzugt orthogonal zueinander angeordnet. Der erste Aktuator 4 ermöglicht Bewegungen und Ultraschallschwingungen des Werkzeugs 3 in x-Richtung, der zweite Aktuator 5 ermöglicht Bewegungen und Ultraschallschwingungen des Werkzeugs 3 in y-Richtung. Die beiden Aktuatoren 4 und 5 sind identisch aufgebaut, im folgenden wird deshalb nur der erste Aktuator 4 näher beschrieben. Im Beispiel umfasst die Halterung 2 eine mittels einer Mutter 8 lös- und schliessbare Spannzange, in der das Werkzeug 3 eingeklemmt ist.

Der Aktuator 4 besteht aus einem Körper 9 und einer mit dem Körper 9 durch vier Stege 10 (in der Figur sind nur drei Stege 10 sichtbar) verbundenen Frontplatte 11, sowie einem aus piezoelektrischen Elementen bestehenden piezoelektrischen Antrieb 12. Die vier Stege 10 bilden ein Festkörpergelenk, das die Frontplatte 11 mit dem Körper 9 verbindet. Von der Frontplatte 11 steht der Steg 6 ab, der die Frontplatte 11 und die Halterung 2 verbindet. Der Steg 6 und die vier Stege 10 verlaufen parallel zueinander, nämlich alle in der x-Richtung. Der piezoelektrische Antrieb 12 ist zwischen der Frontplatte 11 und dem Körper 9 eingespannt. Wenn der piezoelektrische Antrieb 12 mit einer Gleichspannung beaufschlagt wird, dann verschiebt sich die Frontplatte 11 relativ zum Körper 9 in der x-Richtung. Wenn der piezoelektrische Antrieb 12 mit einem Wechselspannungssignal, d.h. einer Wechselspannung oder einem Wechselstrom, beaufschlagt wird, dann schwingt die Frontplatte 11 relativ zum Körper 9 in der x-Richtung hin und her. Der Steg 6 wird einerseits als Blattfeder, die eine Auslenkung der Halterung 2 orthogonal zur Längsrichtung des Steges 6 ermöglicht und andererseits als Verstärker für die Ultraschallschwingungen.

Die Befestigung des piezoelektrischen Antriebs 12 im Aktuator 4 erfolgt über einen Kopplungsmechanismus 13, um eine Verkantung des piezoelektrischen Antriebs 12 beim Einbau wie auch im Betrieb zu verhindern.

Die Fig. 2 zeigt eine Schnittzeichnung des Werkzeugkopfs 1, wobei der Schnitt durch den Steg 6 geht und den Aufbau des Aktuators 4 zeigt. Der Kopplungsmechanismus 13 umfasst zwei aneinander anliegende Körper 14 und 15, deren einander zugewandte Flächen 16 bzw. 17 Kugelflächen sind. Eine der Fläche 17 gegenüberliegende Fläche 18 des Körpers 14 ist eine ebene Fläche, die dank des Kopplungsmechanismus 13 im wesentlichen parallel zur Frontplatte 11 ausgerichtet ist. Der Körper 9 enthält ein in x-Richtung verlaufendes Gewinde, in das eine Schraube 19 hineingeschraubt ist, die mit einem Ende gegen den Körper 15 des Kopplungsmechanismus 13 drückt, so dass der piezoelektrische Antrieb 12 zwischen der Frontplatte 11 und dem Körper 14 eingespannt ist. Die beiden Kugelflächen stellen ein Lagerelement dar und sorgen dafür, dass die Fläche 18 plan an der gegenüberliegenden Fläche des piezoelektrischen Elements 12 anliegt, unabhängig von der Kraft oder dem Drehmoment, das die Schraube 19 auf den Kopplungsmechanismus 13 ausübt. Beim Zusammenbau des Aktuators 4 wird der Körper 14 mittels eines Werkzeugs festgehalten, damit er sich infolge des beim Anziehen von der Schraube 19 ausgeübten Drehmoments nicht dreht. Damit sich die Schraube 19 im Betrieb nicht löst, wird sie entweder mit dem Körper 9 verklebt oder mit einer Kontermutter gesichert.

Der Kopplungsmechanismus 13 kann auch auf andere Weise realisiert werden. Im Prinzip genügt es, wenn die Körper 14 und 15 nur entlang einer parallel zur z-Achse verlaufenden Linie oder zylindrischen Fläche in Berührung sind. Wenn die sich berührenden Flächen 16 und 17 der Körper 14 und 15 kugelförmig oder zylinderförmig sind, dann ist das Risiko einer Abplattung infolge der im Betrieb auftretenden Ultraschallschwingungen viel geringer als bei einer linienförmigen Berührung.

Im Betrieb wird der piezoelektrische Antrieb des Aktuators 4 mit einer Gleichspannung, einem Wechselspannungssignal oder einer Kombination aus Gleichspannung und Wechselspannungssignal beaufschlagt. Eine Gleichspannung bewirkt eine Verschiebung der Frontplatte 11 relativ zum Körper 9 entlang der x-Achse. Ein Wechselspannungssignal bringt die Frontplatte 11 relativ zum Körper 9 in x-Richtung zum Schwingen. Die Frequenz des Wechselspannungssignals liegt im Ultraschallbereich. Wenn dem Wechselspannungssignal eine Gleichspannung überlagert wird, dann bewirkt die Gleichspannung eine Verschiebung des Nullpunkts der Schwingungen. Die Gleichspannungen und die Wechselspannungssignale für die Beaufschlagung der Aktuatoren 4 und 5 werden von einer Steuereinrichtung 30 erzeugt. Die Steuereinrichtung 30 ist programmiert und steuert den Abtrag des Materials von der Oberfläche des Werkstücks. Der Abtrag des Materials wird vorzugsweise mittels geeigneter Sensoren 31 überwacht, wobei die Steuereinrichtung 30 auch die von den Sensoren 31 gelieferten Daten auswertet.

Die Bewegungen der Frontplatte 11 des ersten Aktuators 4 werden über den als Blattfeder wirkenden Steg 6 auf die Halterung 2 übertragen. Ebenso werden die Bewegungen der Frontplatte des zweiten Aktuators 5 über den ebenfalls als Blattfeder wirkenden Steg 7 auf die Halterung 2 übertragen. Dabei verbiegen sich die Stege 6 bzw. 7 und die Halterung 2 wird aus ihrer Ruhelage ausgelenkt. Die Länge der Stege 6 und 7 wie auch die Geometrie der Stege 10 ist so gewählt, dass die Stege im Betrieb Auslenkungen von wenigen Mikrometern ermöglichen, ohne den Bereich der elastischen Deformation zu verlassen.

Der Werkzeugkopf 1 lässt sich für eine Vielzahl von Anwendungen verwenden, wobei ein der Anwendung angepasstes Werkzeug 3 in die Halterung 2 eingesetzt wird. Der Werkzeugkopf kann am Kopf einer beliebigen Werkzeugmaschine befestigt werden, wobei der Kopf der Werkzeugmaschine in den drei Richtungen x, y und z eines kartesischen Koordinatensystems oder in drei Raumrichtungen eines beliebigen anderen Koordinatensystems bewegbar ist und unter Umständen auch weitere Freiheitsgrade aufweist. Die Werkzeugmaschine verhält sich wie ein Roboter, der den erfindungsgemässen Werkzeugkopf im Raum bewegt, so dass mit dem Werkzeugkopf verschiedene Arbeiten durchgeführt werden können, die eine die Positionierungsgenauigkeit der Werkzeugmaschine übersteigende Genauigkeit erfordern. Für viele Anwendungen ist es erforderlich, dass die Positionierungsgenauigkeit des Werkzeugkopfs auch in der z-Richtung grösser ist als die der Werkzeugmaschine. Für diese Anwendungen kann der erfindungsgemässe Werkzeugkopf mit einem piezoelektrischen Antrieb für die z-Richtung ausgestattet werden.

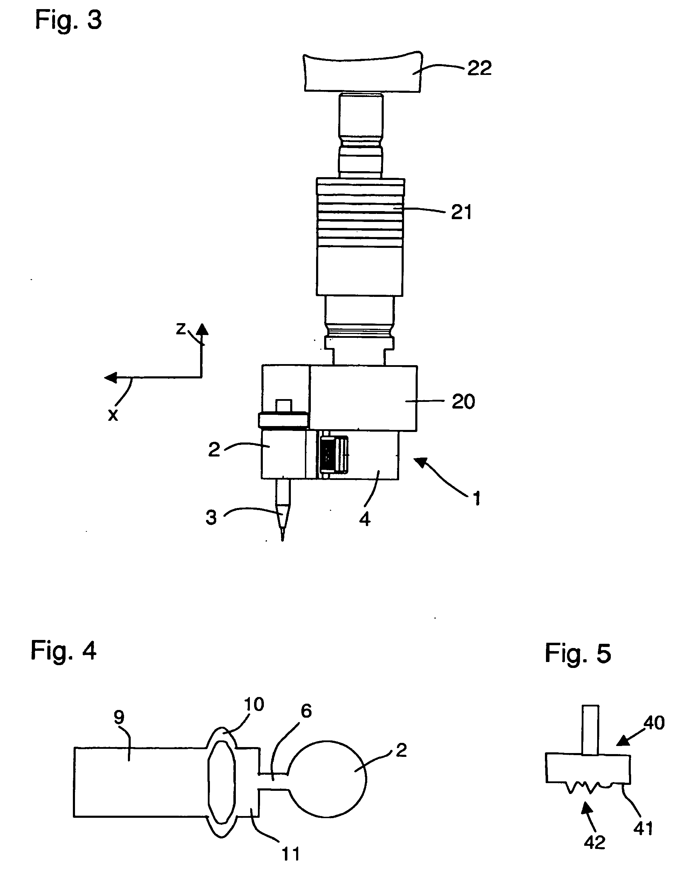

Die Fig. 3 zeigt in seitlicher Ansicht einen solchen Werkzeugkopf 1. Die Aktuatoren 4 und 5 des Werkzeugkopfs 1 sind an einer parallel zur xy-Ebene ausgerichteten Platte 20 befestigt. Die Platte 20 ist über einen piezoelektrischen Antrieb 21 an einer Werkzeugmaschine 22 befestigt. Der piezoelektrische Antrieb 21 ermöglicht die Positionierung des Werkzeugkopfs 1 in einer orthogonal zur Platte 20 verlaufenden Richtung, hier in der z-Richtung, mit einer Genauigkeit, die im Submikrometerbereich liegt. Der piezoelektrische Antrieb 21 ist wie der piezoelektrische Antrieb 12 der Aktuatoren 4 und 5 mit einer Vorspannung zwischen zwei Platten eingeklemmt, die durch einen elastisch deformierbaren Körper beabstandet sind. Ein solcher Körper besteht beispielsweise aus mehreren ringförmigen Plättchen, die durch schmale Stege verbunden sind. Die Plättchen und die Stege sind allerdings keine Einzelteile, sondern aus einem Stück gefertigt. Der vorgespannte Körper wirkt als Feder, so dass der piezoelektrische Antrieb 21 die Platte 20 in positive wie negative z-Richtung auslenken kann. In diesem Fall erzeugt die Steuereinrichtung 30 Gleichspannungen und Wechselspannungssignale sowohl für die Beaufschlagung der Aktuatoren 4 und 5 als auch des piezoelektrischen Antriebs 21.

Die Fig. 4 zeigt in Aufsicht den Körper 9 und die Frontplatte 11 des Aktuators 4. Die Stege 10, die die Frontplatte 11 und den Körper 9 verbinden, sind bei diesem Beispiel anders ausgeführt als beim ersten Beispiel. Die Stege 10 sind u-förmig.

Bevorzugt ist der Werkzeugkopf 1, d.h. die Körper 9, die Stege 10 und die Frontplatten 11 der beiden Aktuatoren 4, 5 sowie die Stege 6 und 7 und die Halterung 2 aus einem Stück Material gefertigt. Der Werkzeugkopf 1 kann aber auch aus Einzelteilen zusammengesetzt sein, die beispielsweise miteinander verklebt oder verlötet sind.

Beispiele für Anwendungen des erfindungsgemässen Werkzeugkopfs 1 werden im folgenden näher beschrieben. Die Liste der Anwendungen ist nicht vollständig.

### Beispiel 1

Bei diesem Beispiel wird der Werkzeugkopf verwendet für die Herstellung von mikromechanischen Strukturen in der Oberfläche eines Werkstücks. Der Werkzeugkopf in der Ausführung gemäss dem Beispiel der Fig. 3 ist an einer Werkzeugmaschine befestigt. In die Halterung 2 ist als Werkzeug 3 ein Stift oder eine Kapillare, im Folgenden allgemein als Kapillare bezeichnet, eingesetzt. Die Werkzeugmaschine platziert die Kapillare über dem Werkstück. Die beiden Aktuatoren 4 und 5 werden je mit einer Wechselspannung beaufschlagt, so dass die Spitze des Werkzeugs im Ultraschallbereich schwingt. Den Wechselspannungen werden sich vergleichsweise langsam ändernde Gleichspannungen überlagert, um die Kapillare über das zu bearbeitende Werkstück zu führen, wobei im Werkstück ein Materialabtrag erfolgt. Über den piezoelektrischen Antrieb 21 wird die Tiefe der im Werkstück entstehenden mikromechanischen Struktur gesteuert, wobei beispielsweise ein Kraftsensor oder ein optischer Distanzsensor für die Ermittlung und Steuerung der z-Position der Kapillare benutzt wird. Solche Mess- und Regelkreise wie auch die Herstellung von Strukturen in einer Oberfläche sind an sich bekannt, weshalb auf weitere Erläuterungen verzichtet wird. Dieses Beispiel unterscheidet sich vom Stand der Technik aber dadurch, dass der erfindungsgemässe Werkzeugkopf die Herstellung von mikromechanischen Strukturen erlaubt, deren Abmessungen viel geringer sind und im Mikrometerbereich oder Submikrometerbereich liegen. Ein wichtiger Vorteil besteht darin, dass die schwingende Spitze des Werkzeugs im Gegensatz zu einer Fräsmaschine keine Stelle enthält, an der die Geschwindigkeit der Spitze Null ist.

### Beispiel 2

Ein beispielsweise nach dem Beispiel 1 hergestelltes Werkstück wird selbst als Werkzeug, d.h. als Stempel, verwendet, der in die Halterung 2 eingesetzt wird. Ein solcher Stempel 40 ist in der Fig. 5 gezeigt. Eine Oberfläche 41 des Stempels 40 ist mit mikromechanischen Strukturen 42 versehen. Diese Oberfläche 41 wird gegen ein zu bearbeitendes Werkstück gedrückt. Die beiden Aktuatoren 4 und 5, und fakultativ auch der piezoelektrische Antrieb 21, werden wiederum mit Wechselspannungssignalen beaufschlagt, so dass die Oberfläche 41 des Stempels 40 schwingt. Die mit Ultraschallfrequenz schwingenden mikromechanischen Strukturen 42 des Stempels 40 führen dazu, dass im Werkstück ebenfalls mikromechanische Strukturen entstehen.

Beispiel 3

Der erfindungsgemässe Werkzeugkopf eignet sich auch für die Nachbearbeitung von mikromechanischen Strukturen, insbesondere zum Polieren bzw. Nachschleifen von optischen Oberflächen. Es ist beispielsweise möglich, eine mikromechanische Struktur mit herkömmlichen Mitteln, sei es durch mechanische oder chemische Bearbeitung, in groben Zügen herzustellen und die vorgeformte Oberfläche mittels des erfindungsgemässen Werkzeugkopfs nachzubearbeiten.

Das Schleifen der Oberfläche des Werkstücks wird bei diesen drei Beispielen vorzugsweise unterstützt durch ein Schleifmittel, wie dies auch im Stand der Technik üblich ist. Wenn als Werkzeug eine Kapillare mit einer Längsbohrung verwendet wird, dann kann das Schleifmittel durch die Längsbohrung der Kapillare zugeführt werden. Anstelle des Schleifmittels oder zusätzlich zum Schleifmittel kann ein Ätzmittel durch die Längsbohrung der Kapillare zugeführt werden. Dies ermöglicht ein selektives Ätzen der Oberfläche des Werkstücks.

## Patentansprüche

1. Werkzeugkopf, mit einer Halterung (2) für die Aufnahme eines Werkzeugs (3) und zwei an einer Platte (20) befestigten Aktuatoren (4, 5), die je einen Körper (9) und eine mit dem Körper (9) durch Stege (10) verbundene Frontplatte (11) sowie einen piezoelektrischen Antrieb (12) umfassen, **dadurch gekennzeichnet, dass** der piezoelektrische Antrieb (12) in einem zwischen der Frontplatte (11) und dem Körper (9) gebildeten Hohlraum eingespannt ist und von einer Steuereinrichtung (30) mit einem Wechselspannungssignal und mit einer Gleichspannung beaufschlagbar ist, wobei das Wechselspannungssignal dazu dient, die Frontplatte (11) relativ zum Körper (9) in in Längsrichtung der Stege (10) gerichtete Schwingungen zu versetzen und wobei die Gleichspannung dazu dient, die Frontplatte (11) relativ zum Körper (9) in Längsrichtung der Stege (10) auszulenken, und dass die Frontplatten (11) der beiden Aktuatoren (4, 5) durch je einen von der Frontplatte (11) abstehenden Steg (6 bzw. 7) mit der Halterung (2) verbunden sind.

2. Werkzeugkopf nach Anspruch 1, **dadurch gekennzeichnet, dass** die Platte (20) mittels eines piezoelektrischen Antriebs (21) in einer senkrecht zur Platte (20) verlaufenden Richtung hin und her bewegbar ist.

3. Verwendung des Werkzeugkopfs nach Anspruch 1 oder 2, wobei das Werkzeug (3) eine Kapillare ist.

4. Verwendung des Werkzeugkopfs nach Anspruch 1 oder 2 als Fräskopf, wobei das Werkzeug (3) ein Stift ist.

5. Verwendung des Werkzeugkopfs nach Anspruch 1 oder 2, wobei das Werkzeug (3) ein Stempel (40) ist, der eine Oberfläche (41) mit mikromechanischen Strukturen (42) enthält.

## Claims

1. Tool head, with a holder (2) for accommodating a tool (3) and with two actuators (4, 5) attached to a plate (20) that each comprise a body (9) and a front plate (11) connected to the body (9) by means of webs (10) as well as a piezoelectric drive (12), **characterised in that** the piezoelectric drive (12) is clamped in a cavity formed between the front plate (11) and the body (9) and to which an alternating voltage signal and a direct voltage can be applied from a control device (30), whereby the alternating voltage signal serves to vibrate the front plate (11) relative to the body (9) with oscillations aligned in the longitudinal direction of the webs (10) and whereby the direct voltage serves to displace the front plate (11) relative to the body (9) in the longitudinal direction of the webs (10) and **in that** the front plates (11) of the two actuators (4, 5) are each connected to the holder (2) by means of a web (6 or 7) projecting from the front plate (11).

2. Tool head according to claim 1, **characterised in that**, by means of a piezoelectric drive (21), the plate (20) is moveable back and forth in a direction running perpendicular to the plate (20).

3. Use of a tool head according to claim 1 or 2, whereby the tool (3) is a capillary.

4. Use of a tool head according to claim 1 or 2 as a milling head, whereby the tool (3) is a pin.

5. Use of a tool head according to claim 1 or 2, whereby the tool (3) is a stamp (40) that contains a surface (41) with micro-mechanical structures (42).

## Revendications

1. Tête d'outil, comprenant un support (2) afin de réceptionner un outil (3) et deux actionneurs (4, 5) fixés sur une plaque (20) qui comportent chacun un corps (9) et une plaque frontale (11) reliée au corps (9) par des barrettes (10) ainsi qu'un entraînement piézoélectrique (12), **caractérisée en ce que** l'entraînement piézoélectrique (12) est encastré dans une cavité formée entre la plaque frontale (11) et le corps (9) et peut être actionné par un dispositif de commande (30) comportant un signal de tension alternative et une tension continue, le signal de tension alternative servant à transposer la plaque frontale (11) relativement par rapport au corps (9) dans des vibrations dirigées dans la direction longitudinale des barrettes (10) et la tension continue servant à dévier la plaque frontale (11) relativement par rapport au corps (9) dans la direction longitudinale des barrettes (10), et **en ce que** les plaques frontales (11) des deux actionneurs (4, 5) sont reliées chacune au support (2) par une barrette (6 ou 7) dépassant de la plaque frontale (11).

2. Tête d'outil selon la revendication 1, **caractérisée en ce que** la plaque (20) peut être déplacée en va-et-vient au moyen d'un entraînement piézoélectrique (21) dans une direction s'étendant perpendiculairement à la plaque (20).

3. Utilisation de la tête d'outil selon la revendication 1 ou 2, dans laquelle l'outil (3) est un capillaire.

4. Utilisation de la tête d'outil selon la revendication 1 ou 2 comme tête de fraisage, dans laquelle l'outil (3) est une goupille.

5. Utilisation de la tête d'outil selon la revendication 1 ou 2, dans laquelle l'outil (3) est un poinçon (40) qui contient une surface (41) présentant des structures micromécaniques (42).
